# EUROPÄISCHE PATENTSCHRIFT

(11) **EP 2 510 302 B1**
(45) Veröffentlichungstag und Bekanntmachung des Hinweises auf die Patenterteilung: **12.02.2014**
(21) Anmeldenummer: 10730458.6
(22) Anmeldetag: 06.07.2010
(51) Int. Cl.: F28F 1/20

(54) **WÄRMEÜBERTRAGUNGSROHR**
HEAT TRANSFER TUBE
TUBE ÉCHANGEUR THERMIQUE

(30) Priorität: 11.12.2009 DE 102009057904
(43) Veröffentlichungstag der Anmeldung: 17.10.2012
(73) Patentinhaber: Deutsches Zentrum für Luft- und Raumfahrt e.V., 51147 Köln (DE); F.W. Brökelmann Aluminiumwerk GmbH & Co. KG, 59469 Ense-Höingen (DE)
(72) Erfinder: BAUER, Thomas, 50672 Köln (DE); HACHMANN, Bernd, 58730 Fröndenberg (DE)
(74) Vertreter: Albrecht, Ralf
(86) Internationale Anmeldenummer: PCT/EP2010/059673
(87) Internationale Veröffentlichungsnummer: WO 2011/069693

(56) Entgegenhaltungen:
- WO-A2-2009/008698
- GB-A- 1 588 120
- GB-A- 2 082 310
- US-A- 3 735 465
- US-A- 4 236 578

## Beschreibung

Die vorliegende Erfindung betrifft einen Latentwärmespeicher oder einen thermo-chemischen Speicher, der wenigstens ein Warmeübertragungsrohr mit einem Rohrelement und mehreren am Außenumfang des Rohrelementes angeordneten und sich auswärts erstreckenden Rippen und ein das Wärmeübertragungsrohr umgebendes Speichermaterial aufweist. Ein solchen Speicher entspricht dem Oberbegriff des Anspruchs 1 und ist aus US 4,624,242 bekannt.

Derzeit sind verschiedene Wärmespeicher bekannt, die sich bezüglich ihres Aufbaus sowie ihrer Funktionsweise voneinander unterscheiden. Sensible Wärmespeicher nutzen die fühlbare Wärme oder die Wärmekapazität eines Materials. Sie ändern beim Be- und Entladen das Temperaturniveau des Speichermaterials. Latentwärmespeicher nutzen beispielsweise die Enthalpie reversibler thermodynamischer Zustandsänderungen eines Speichermediums, insbesondere den Phasenübergang von fest zu flüssig und umgekehrt. Beim Aufladen des Wärmespeichers wird ein in diesem vorgesehenes Phasenwechselmaterial geschmolzen. Während des Schmelzvorgangs nimmt das Phasenwechselmaterial eine große Wärmeenergie in Form der Schmelzwärme auf. Aufgrund der Reversibilität dieses Vorgangs gibt das Phasenwechselmaterial diese Wärmemenge beim Erstarren wieder ab. Einem ähnlichen Prinzip folgen so genannte thermochemische Wärmespeicher, welche die Enthalpie reversibler chemischer Reaktionen nutzen, wie beispielsweise Absorptions- und Desorptionsprozesse, die auf Chemisorption beruhen.

Beim Aufladen eines Wärmespeichers muss an das Speichermedium Wärme übertragen werden. Hierzu können so genannte Wärmeübertragungsrohre eingesetzt werden, über die eine Wärmeübertragung von einem durchströmenden Medium indirekt an das Speichermedium erfolgt. Zum Durchleiten des Mediums umfassen Wärmeübertragungsrohre ein Rohrelement. Zur Vergrößerung der Wärmeübertragungsfläche sind am Außenumfang des Rohrelementes normalerweise sich auswärts erstreckende Rippen angeordnet. Die Rippen können einteilig mit dem Rohrelement ausgebildet sein, sie können mit dem Rohrelement metallisch in Kontakt stehen, oder sie sind mit dem Rohrelement metallisch durch eine Löt- oder Schweißverbindung verbunden.

Bei einteiliger Ausbildung werden die Rippen beispielsweise mit Hilfe eines Walzprozesses am Außenumfang des Rohrelementes erzeugt. Eine solche einteilige Ausbildung ist allerdings dahingehend von Nachteil, dass das Rohrelement und die Rippen aus demselben Material bestehen müssen, womit die Anforderungen an eine hohe Temperaturfestigkeit innen und eine hohe Wärmeleitfähigkeit außen nicht optimal erfüllt werden können. Bimetallrohre weisen diesen Nachteil nicht auf, sind jedoch aufgrund der unterschiedlichen Wärmeausdehnung der Komponenten nur in einem eingeschränkten Temperaturbereich einsetzbar. Die Rohrelement- und Rippenmaterialien sind in diesem Fall entsprechend nicht frei wählbar. Darüber hinaus ist die Gestaltungsfreiheit der Rippengeometrie durch den Herstellungsprozess eingeschränkt. So ist insbesondere der durch einen Walzprozess herstellbare Rippendurchmesser zu gering.

Alternativ zur einteiligen Ausgestaltung können die Rippen in Form von separaten Bauteilen an dem Außenumfang des Rohrelementes befestigt werden. Beispielsweise ist es bekannt, Ringelemente in Form von Rippen definierenden Blechen vorzusehen, die am Außenumfang des Rohrelementes angeordnet werden, woraufhin ein Aufweiten des Rohres von innen erfolgen kann, um das Ringelement am Rohrelement festzulegen. Hierbei wird allerdings eine schlechte wärmetechnische Anbindung von Rohrelement und Rippen erzielt. Auch ist die maximale Einsatztemperatur begrenzt. Darüber hinaus ist auch die Wandstärke des Rohrelementes dahingehend limitiert, dass sie sich im gewünschten Maß aufweiten lassen muss.

Ferner können Ringelemente der zuvor beschriebenen Art oder auch Rippen in Form von Blechstreifen oder dergleichen mit dem Außenumfang des Rohrelementes verlötet oder verschweißt werden. Hierbei muss jedoch die Kompatibilität des Lotes gewährleistet sein.

Die DE-A-2 002 572 offenbart einen Umgebungsluft-Verdampfer mit Wärmeübertragungsrohren, bei denen die Rippen an das Rohrelement klemmend umgreifenden Ringsegmenten ausgebildet sind.

Die US-A-3,280,907 offenbart eine Wärmeübertragungseinrichtung mit einen ähnlich aufgebauten Wärmeübertragungsrohr, bei dem die die Rippen ausbildenden Ringsegmente klemmend unter Verwendung einer federelastischen Spanneinrichtung an dem zugehörigen Rohrelement gehalten sein können.

In Abhängigkeit vom Herstellungsverfahren unterscheiden sich derzeit erhältliche Wärmeübertragungsrohre somit in Bezug auf die maximale Einsatztemperatur, die Gestaltungsfreiheit bezüglich der Rippengeometrie, die maximale Wandstärke des Rohrelementes, die Güte der wärmetechnischen Anbindung zwischen Rohrelement und Rippen, die Kompatibilität der Materialien für das Rohrelement und der Rippen und die Kompatibilität der Lot- bzw. Schweißmaterialien.

Ausgehend von diesem Stand der Technik ist es eine Aufgabe der vorliegenden Erfindung, einen Latentwärmespeicher oder einen thermo-chemischen Speicher der eingangs genannten Art zu schaffen, bei dem die Gestaltung der Rippengeometrie, insbesondere des Rippendurchmessers, die maximale Einsatztemperatur, die maximale Wandstärke des Rohrelementes ebenso wie die Materialien des Rohrelementes und der Rippen frei wählbar sind, wobei eine gute wärmetechnische Anbindung zwischen dem Rohrelement und den Rippen realisiert werden soll, und bei dem eine ordnungsgemäße Funktionsweise sichergestellt ist.

Zur Lösung dieser Aufgabe schafft die vorliegende Erfindung ein Wärmeübertragungsrohr der eingangs genannten Art, bei dem die Rippen an das Rohrelement umgreifenden und mit einer federelastischen Spanneinrichtung, insbesondere in Form von wenigstens einem federelastischen Klammerelement, aneinander befestigten Ringsegmenten ausgebildet sind, insbesondere an zwei jeweils eine Halbschale bildenden Ringsegmenten, und wobei das wenigstens eine Wärmeübertragungsrohr im Wesentlichen senkrecht im Wärmespeicher angeordnet ist. Das Vorsehen mehrerer das Rohrelement umgreifender und mit einer federelastischen Spanneinrichtung aneinander befestigter Ringsegmente ermöglicht die Verwendung von Materialien mit unterschiedlichen Ausdehnungskoeffizienten für das Rohrelement und die Rippen bei hohen maximalen Einsatztemperaturen zu verwenden. Aufgrund ihrer Federelastizität stellt die Spanneinrichtung stets einen guten thermischen Kontakt zwischen dem Rohrelement und den Ringsegmenten und entsprechend eine gute wärmetechnische Anbindung zwischen dem Rohrelement und den Rippen sicher, da sie auf thermische Materialausdehnungen flexibel regiert. Bei der Ausbildung der Spanneinrichtung in Form wenigstens eines sich in Längsrichtung des Wärmeübertragungsrohrs erstreckenden federelastischen Klammerelementes ist der thermische Kontakt zwischen dem Rohrelement und den Ringsegmenten darüber hinaus über die Länge der Ringsegmente konstant. Ferner ist die Ausgestaltung der Rippen im Wesentlichen frei wählbar, insbesondere der Rippendurchmesser. Auch ist die maximale Wandstärke des Rohrelementes in keiner Weise eingeschränkt. Das bzw. die Klammerelemente sind gemäß einer Ausgestaltung der vorliegenden Erfindung aus Federstahl ausgebildet. Entsprechend können thermisch bedingte Ausdehnungen oder Schrumpfungen flexibel aufgenommen werden, so dass stets eine sehr gute wärmetechnische Anbindung von Rohrelement und Ringsegmenten sichergestellt ist. Die im Wesentlichen senkrechte Anordnung des wenigstens einen Wärmeübertragungsrohrs im Wärmespeicher stellt eine freie Volumenausdehnung des Phasenwechselmaterials in vertikaler Richtung im Wärmespeicher beim Phasenwechsel von fest zu flüssig oder umgekehrt sicher, wodurch eine ordnungsgemäße Funktionsweise des Latentwärmespeichers gewährleistet wird. Analoges gilt für den thermo-chemischen Speicher.

Gemäß einer Ausgestaltung der vorliegenden Erfindung ist jedes Klammerelement ein Biegeteil mit einem Basisabschnitt und zwei sich von gegenüberliegenden Seiten des Basisabschnittes aufeinander zu erstreckenden Klammerabschnitten, wobei sich an die Klammerabschnitte bevorzugt voneinander weg gespreizte Endabschnitte anschließen, die als Aufschiebehilfe dienen, beispielsweise während des Aufschiebens auf einen an den Ringsegmenten ausgebildeten Verklammerungssteg. Entsprechend weist jedes Klammerelement einen im Wesentlichen Omega-förmigen Querschnitt auf.

Bevorzugt sind die Ringsegmente als Strangpressprofile ausgebildet, wobei sich die Rippen in Längsrichtung des Rohrelementes erstrecken. Das Strangpressen stellt einerseits ein preiswertes Herstellungsverfahren dar. Andererseits ist der Querschnitt der Rippen in Längsrichtung des Wärmeübertragungsrohrs konstant, was beim Einsatz in einem Wärmespeicher eine freie Volumenausdehnung des Speichermaterials in Längsrichtung des Wärmeübertragungsrohrs gestattet. Entsprechend können thermomechanische Spannungen, die durch die Volumenausdehnung des Speichermaterials verursacht werden, eliminiert oder zumindest reduziert werden. Dies ist insbesondere bei Latentwärmespeichern von Bedeutung, da die bei diesen eingesetzten Phasenwechselmaterialien beim Phasenwechsel von fest zu flüssig oder umgekehrt eine große Volumenausdehnung erfahren.

Bevorzugt sind die Geometrie des Rohrelementes und die der Ringsegmente derart aufeinander abgestimmt, dass die Ringsegmente im Wesentlichen vollflächig an dem Rohrelement anliegen. Auf diese Weise wird ein guter Wärmeübergang vom Rohrelement auf die Ringsegmente sichergestellt.

Zur Vergrößerung der Rippenoberfläche weisen diese vorteilhaft Verzweigungen auf.

Gemäß einer Ausgestaltung der vorliegenden Erfindung weisen die Ringsegmente Verklammerungsstege auf, die von den Klammerelementen umgriffen werden. Die Verklammerungsstege sind dabei an die Klammerelemente derart formangepasst, dass die Klammerelemente einfach zu montieren sind und ein sicherer Halt der Ringsegmente an dem Rohrelement bei guter Kontaktierung gewährleistet ist.

Die Ringsegmente sind bevorzugt aus einer Aluminiumlegierung oder aus unlegiertem Aluminium hergestellt, insbesondere aus Legierungen der Aluminiumgruppen 1xxx, 3xxx und 6xxx. Diese Materialien haben sich als besonders vorteilhaft herausgestellt.

Bei dem Rohrelement kann es sich um ein geschweißtes oder ein gezogenes Rohrelement handeln.

Das Rohrelement ist bevorzugt aus Stahl oder Edelstahl hergestellt.

Bei einem Latentwärmespeicher handelt es sich bei dem das Wärmeübertragungsrohr umgebenden Speichermaterial um ein Phasenwechselmaterial, insbesondere um Salze und Salzmischungen, insbesondere Alkalimetallnitrate, wie beispielsweise NaNO3 oder KNO₃-NaNO₃, Nitrite, Sulfate, Carbonate, Chloride, Hydroxide, Bromide, Thiocyanate und Fluoride oder Kombinationen von diesen, insbesondere wasserfreie Salze mit einer Schmelztemperatur oberhalb von 120°C oder Salzhydrate mit einer maximalen Phasenumwandlung bis 200°C.

Weitere Merkmale und Vorteile der vorliegenden Erfindung werden nachfolgend anhand einer Ausführungsform eines erfindungsgemäßen Warmeübertragungsrohrs unter Bezugnahme auf die beiliegende Zeichnung beschrieben. Darin ist
- **Fig. 1**: eine perspektivische Ansicht, die ein Wärmeübertragungsrohr gemäß einer Ausführungsform der vorliegenden Erfindung zeigt;
- **Fig. 2**: eine Seitenansicht des in Figur 1 dargestellten Wärmeübertragungsrohrs, die dessen Stirnseite zeigt; und
- **Fig. 3**: ein Diagramm, das Temperaturverläufe über eine Vielzahl von Schmelz-/Erstarrungszyklen zeigt.

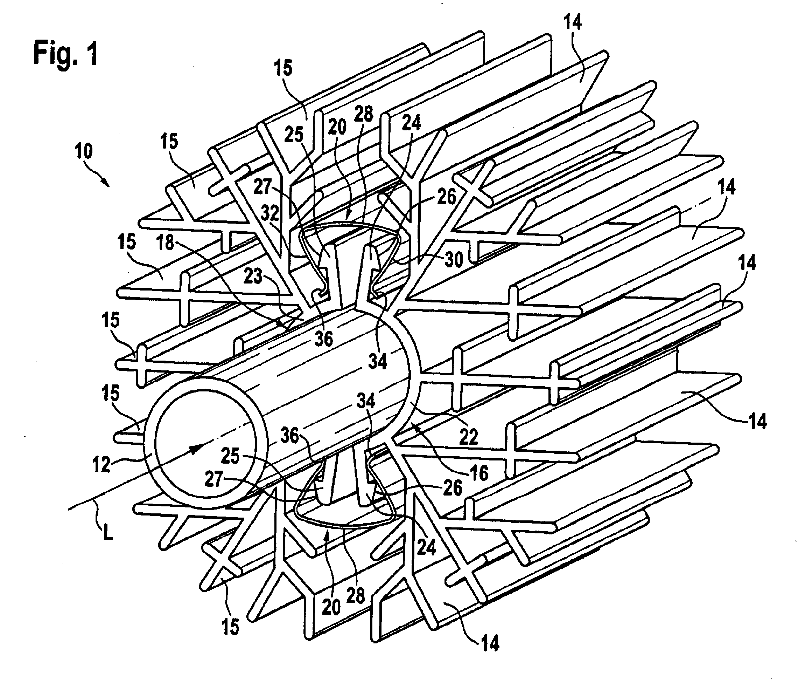

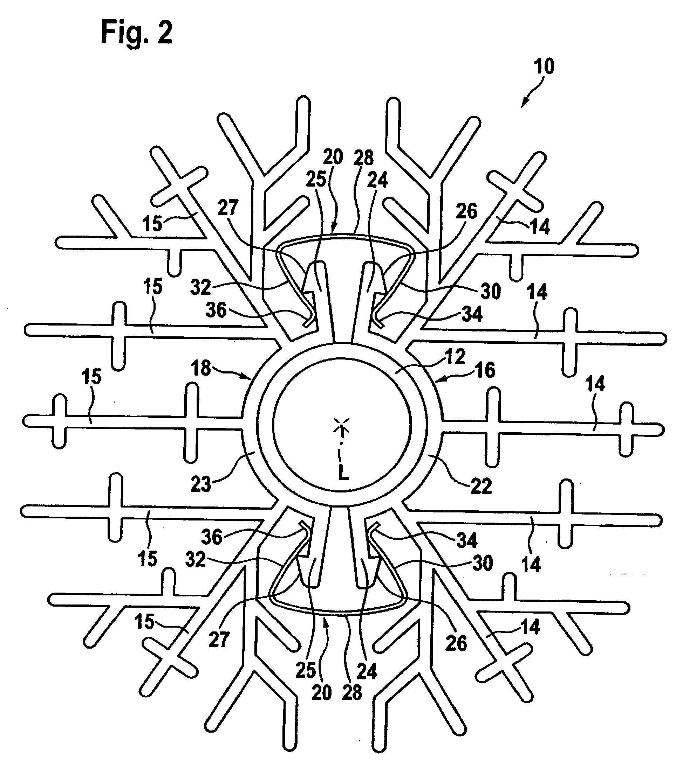

Die Figuren 1 und 2 zeigen ein Wärmeübertragungsrohr 10 gemäß einer Ausführungsform der vorliegenden Erfindung. Das Wärmeübertragungsrohr 10 umfasst ein Rohrelement 12, zwei Rippen 14, 15 ausbildende Ringsegmente 16 und 18, die jeweils eine am Außenumfang des Rohrelementes 12 angeordnete und diesen umfassende Halbschale bilden, und zwei Klammerelemente 20, mit denen die Ringsegmente 16 und 18 aneinander befestigt und an dem Rohrelement 12 gehalten sind.

Bei dem Rohrelement 12 handelt es sich um ein Stahlrohr mit einer im Querschnitt betrachtet kreisringförmigen Mantelfläche. Die Ringsegmente 16 und 18 sind jeweils als Strangpressprofile aus einer Aluminiumlegierung ausgebildet, so dass diese in Längsrichtung L einen konstanten Querschnitt aufweisen. Die Geometrie des Rohrelementes 12 und die der Ringsegmente 16 und 18 sind derart aufeinander abgestimmt, dass die Ringsegmente 16 und 18 jeweils im Wesentlichen vollflächig mit einem einen kreisringsegmentförmigen Querschnitt aufweisenden Ringsegmentabschnitt 22 bzw. 23 an der Mantelfläche des Rohrelementes12 anliegen. An den freien Enden der Ringsegmentabschnitte 22, 23 sind jeweils radial auswärts vorstehende Verklammerungsstege 24, 25 ausgebildet, die von den Klammerelementen 20 umgriffen werden. Um einen sicheren Sitz der Klammerelemente 20 zu gewährleisten, sind die Verklammerungsstege 24, 25 an ihren freien Enden jeweils mit Rastnasen 26, 27 versehen. Die Rippen 14, 15 der Ringsegmente 16 und 18 sind vielfach verzweigt, wodurch die Oberfläche der Rippen 14, 15 vergrößert wird.

Bei den Klammerelementen 20 handelt es sich um aus Federstahl hergestellte Biegeteile mit einem Basisabschnitt 28 und zwei sich von gegenüberliegenden Seiten des Basisabschnittes 28 aufeinander zu erstreckenden Klammerabschnitten 30 und 32, an die sich voneinander weg gespreizte Endabschnitte 34 und 36 anschließen, die als Aufschiebehilfe dienen.

Zur Montage des in den Figuren 1 und 2 dargestellten Wärmeübertragungsrohrs 10 werden die Ringsegmente 16 und 18 mit ihren Ringsegmentabschnitten 22, 23 um die Mantelfläche des Rohrelementes 12 gelegt. Daraufhin werden die vier Klammerelemente 20 auf die an den Ringsegmenten 16 und 18 ausgebildeten Verklammerungsstege 24, 25 aufgeschoben, so dass die Ringsegmente 16 und 18 aneinander befestigt und mit Druck an dem Rohrelement 12 gehalten sind. In diesem Zustand liegen die Ringsegmentabschnitte 22, 23 der Ringsegmente 16 und 18 im Wesentlichen vollflächig an der Mantelfläche des Rohrelementes 12 an.

Die in den Figuren 1 und 2 dargestellte Ausgestaltung des Wärmeübertragungsrohrs 10 ist dahingehend von Vorteil, dass durch das Vorsehen mehrerer das Rohrelement 12 umfassender und mit Klammerelementen 20 aneinander befestigte Ringsegmente 16 und 18 die Verwendung von Materialien mit unterschiedlichen Ausdehnungskoeffizienten für das Rohrelement 12 und die Rippen 14, 15 bei hohen maximalen Einsatztemperaturen ermöglicht wird, wie vorliegend Stahl für das Rohrelement 12 und eine Aluminiumlegierung für die Rippen 14, 15. Darüber hinaus stellen die Klammerelemente 20 stets einen guten thermischen Kontakt her zwischen dem Rohrelement 12 und den Ringsegmenten 16 und 18 und entsprechend eine gute wärmetechnische Anbindung zwischen dem Rohrelement 12 und den Rippen 14, 15 sicher, da sie auf thermische Materialausdehnungen flexibel reagieren können. Ferner ist die Ausgestaltung der Rippen 14, 15 im Wesentlichen frei wählbar, was insbesondere für den Außendurchmesser der Rippen 14, 15 gilt. Auch ist die maximale Wandstärke des Rohrelementes 12 in keiner Weise eingeschränkt.

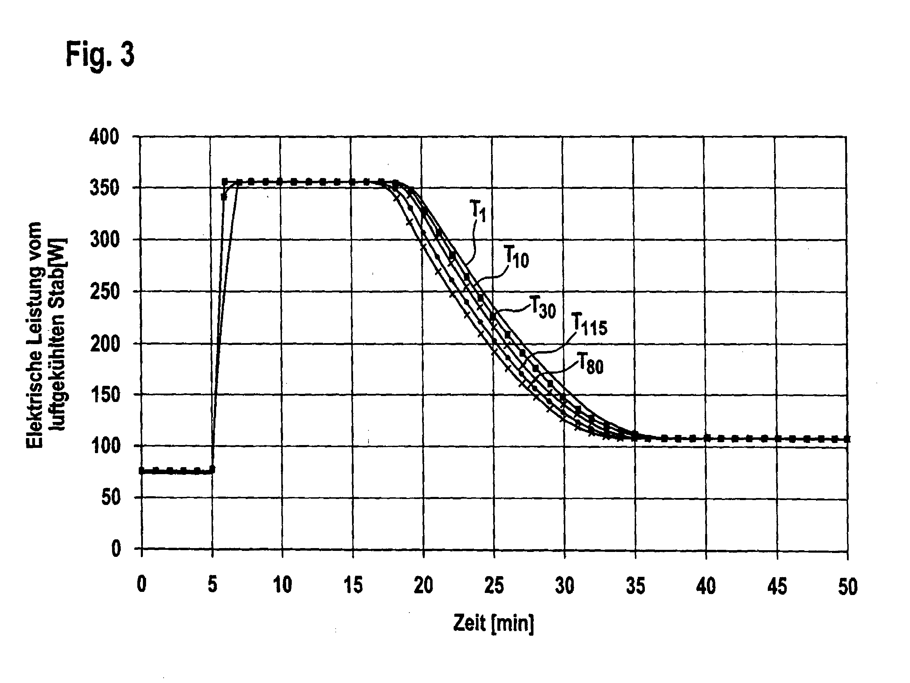

Die Figur 3 zeigt die Ergebnisse einer Versuchsreihe, die mit einem Wärmeübertragungsrohr 10 der in den Figuren 1 und 2 dargestellten Art durchgeführt wurde. Hierzu wurde das Wärmeübertragungsrohr 10 in einen nicht näher dargestellten Latentwärmespeicher eingesetzt. Als Phasenwechselmaterial wurden 1.070 g Natriumnitrat mit einer Schmelztemperatur von 306 °C verwendet. Die Ein- und Auskopplung der Wärme erfolgte über das Wärmeübertragungsrohr 10 mittels Luftkühlung und elektrischer Beheizung. Die Güte des mithilfe der Klammerelemente 20 erzeugten Verbunds zwischen dem Rohrelement 12 und den Ringsegmenten 16 und 18 wurde in 115 Schmelz-/Erstarrungszyklen ermittelt. Ein Zyklus wurde dabei wie folgt in vier aufeinander folgende Phasen unterteilt:
1) isotherme Erwärmung bei 280°C für 3 Stunden;
2) Durchführung eines Temperatursprungs von 280°C auf 330°C;
3) Isotherme Erwärmung bei 330°C für 3 Stunden; und
4) Durchführung eines Temperatursprungs von 330°C auf 280°C.

Die Temperaturverläufe T₁, T₁₀, T₃₀, T₈₀ und T₁₁₅ (der Index entspricht der Zyklusnummer) in Figur 3 zeigen, dass sich die Zeit bis zur vollständigen Einkopplung der Wärme bei einem Sprung von 280°C auf 330°C zum Zeitpunkt "5 Minuten" (Phase 2 und 3) über die Zyklenzahl nahezu konstant verhält. Nach ca. 35 Minuten liegt bei allen Messungen ein Gleichgewichtszustand vor. In diesem Zustand ist der Wärmestrom an der Mantelfläche des Rohrelementes 12 nahezu 0. Die Ergebnisse zeigen somit, dass sich der Kontaktwiderstand zwischen dem Rohrelement 12 und den Ringsegmenten 16 und 18 über 115 Schmelz-/Erstarrungszyklen praktisch nicht ändert.

## Patentansprüche

1. Latentwärmespeicher oder thermo-chemischer Speicher, der wenigstens ein Wärmeübertragungsrohr (10) mit einem Rohrelement (12) und mehreren am Außenumfang des Rohrelementes (12) angeordneten und sich auswärts erstreckenden Rippen (14, 15) und ein das Wärmeübertragungsrohr (10) umgebendes Speichermaterial aufweist, **dadurch gekennzeichnet, dass** die Rippen (14, 15) an das Rohrelement (12) umgreifenden und mit einer federelastischen Spanneinrichtung aneinander befestigten Ringsegmenten (16, 18) ausgebildet sind, insbesondere an zwei jeweils eine Halbschale bildenden Ringsegmenten (16, 18), wobei das wenigstens eine Wärmeübertragungsrohr (10) im Wesentlichen senkrecht im Wärmespeicher angeordnet ist.

2. Latentwärmespeicher oder thermo-chemischer Speicher nach Anspruch 1, **dadurch gekennzeichnet, dass** die Spanneinrichtung wenigstens ein federelastisches **Klammerelement** (20) aufweist.

3. Latentwärmespeicher oder thermo-chemischer Speicher nach einem der vorhergehenden Ansprüche, **dadurch gekennzeichnet, dass** die Klammerelemente (20) aus Federstahl hergestellt sind.

4. Latentwärmespeicher oder thermo-chemischer Speicher nach Anspruch 2 oder 3, **dadurch gekennzeichnet, dass** jedes Klammerelement (20) ein Biegeteil ist mit einem Basisabschnitt (28) und zwei sich von gegenüberliegenden Seiten des Basisabschnittes (28) aufeinander zu erstreckenden Klammerabschnitten (30, 32), wobei sich an die Klammerabschnitte (30, 32) bevorzugt voneinander weg gespreizte Endabschnitte (34, 36) anschließen, die als Aufschiebehilfe dienen.

5. Latentwärmespeicher oder thermo-chemischer Speicher nach einem der vorhergehenden Ansprüche, **dadurch gekennzeichnet, dass** die Ringsegmente (16, 18) als Strangpressprofile ausgebildet sind, wobei sich die Rippen (14, 15) in Längsrichtung des Rohrelementes(12) erstrecken.

6. Latentwärmespeicher oder thermo-chemischer Speicher nach einem der vorhergehenden Ansprüche, **dadurch gekennzeichnet, dass** die Geometrie des Rohrelementes (12) und die der Ringsegmente (16, 18) derart aufeinander abgestimmt sind, dass die Ringsegmente (16, 18) im Wesentlichen vollflächig an dem Rohrelement (12) anliegen.

7. Latentwärmespeicher oder thermo-chemischer Speicher nach einem der vorhergehenden Ansprüche, **dadurch gekennzeichnet, dass** die Rippen (14, 15) Verzweigungen aufweisen.

8. Latentwärmespeicher oder thermo-chemischer Speicher nach einem der Ansprüche 2 bis 7, **dadurch gekennzeichnet, dass** die Ringsegmente (16, 18) Verklammerungsstege (24, 25) aufweisen, die von den Klammerelementen (20) umgriffen werden.

9. Latentwärmespeicher oder thermo-chemischer Speicher nach einem der vorhergehenden Ansprüche, **dadurch gekennzeichnet, dass** die Ringsegmente (16, 18) aus einer Aluminiumlegierung oder aus unlegiertem Aluminium hergestellt sind, insbesondere aus Legierungen der Aluminiumgruppen 1xxx, 3xxx und 6xxx.

10. Latentwärmespeicher oder thermo-chemischer Speicher nach einem der vorhergehenden Ansprüche, **dadurch gekennzeichnet, dass** es sich bei dem Rohrelement (12) um ein geschweißtes oder ein gezogenes Rohrelement handelt.

11. Latentwärmespeicher oder thermo-chemischer Speicher nach einem der vorhergehenden Ansprüche, **dadurch gekennzeichnet, dass** das Rohrelement (12) aus Stahl oder aus Edelstahl hergestellt ist.

12. Latentwärmespeicher oder thermo-chemischer Speicher nach einem der vorhergehenden Ansprüche, **dadurch gekennzeichnet, dass** das Phasenwechselspeichermaterial in Form von Salzen und Salzmischungen vorgesehen ist, insbesondere Alkalimetallnitrate, Nitrite, Sulfate, Karbonate, Chloride, Hydroxide, Bromide, Thiocyanate und Fluoride oder Kombinationen von diesen, insbesondere wasserfreie Salze mit einer Schmelztemperatur oberhalb von 120°C oder Salzhydrate mit einer maximalen Phasenumwandlungstemperatur bis 200°C.

## Claims

1. Latent heat accumulator or thermo chemical accumulator comprising at least one heat transfer pipe (10) with a pipe element (12) and a number of ribs arranged around the outer circumference of the pipe element (12) and extending outwards (14, 15) and a storage material surrounding said heat transfer pipe (10), **characterised in that** the ribs (14, 15) are formed on annular segments (16, 18) encompassing the pipe element (12) and fastened to one another with a spring-elastic clamping device, in particular on two annular segments (16, 18) respectively forming a half shell, wherein the at least one heat transfer pipe (10) is arranged substantially vertically within the heat accumulator.

2. Latent heat accumulator or thermo chemical accumulator according to Claim **1, characterised in that** the clamping device has at least one spring-elastic clamp element (20).

3. Latent heat accumulator or thermo chemical accumulator according to any of the preceding claims, **characterised in that** the clamp elements (20) are produced from spring steel.

4. Latent heat accumulator or thermo chemical accumulator according to Claim 2 or 3, **characterised in that** each clamp element (20) is a flexible part comprising a base section (28) and two clamp sections (30, 32) to be extended over one another from opposite sides of the base section (28), end sections (34, 36) preferably splayed apart from one another adjoining the clamp sections (30, 32) and acting as a push-on aid.

5. Latent heat accumulator or thermo chemical accumulator according to any of the preceding claims, **characterised in that** the annular segments (16, 18) are in the form of extrusion moulded profiles, the ribs (14, 15) extending in the longitudinal direction of the pipe element (12).

6. Latent heat accumulator or thermo chemical accumulator according to any of the preceding claims, **characterised in that** the geometry of the pipe element (12) and that of the annular segments (16, 18) are matched to one another such that the annular segments (16, 18) rest with substantially their entire surface against the pipe element (12).

7. Latent heat accumulator or thermo chemical accumulator according to any of the preceding claims, **characterised in that** the ribs (14, 15) have branches.

8. Latent heat accumulator or thermo chemical accumulator according to any of Claims 2 to 7, **characterised in that** the annular segments (16, 18) have clamping bars (24, 25) which are encompassed by the clamp elements (20).

9. Latent heat accumulator or thermo chemical accumulator according to any of the preceding claims, **characterised in that** the annular segments (16, 18) are produced from an aluminium alloy or from unalloyed aluminium, in particular from alloys of aluminium groups 1 xxx, 3xxx and 6xxx.

10. Latent heat accumulator or thermo chemical accumulator according to any of the preceding claims, **characterised in that** the pipe element (12) is a welded or a drawn pipe element.

11. Latent heat accumulator or thermo chemical accumulator according to any of the preceding claims, **characterised in that** the pipe element (12) is produced from steel or from stainless steel.

12. Latent heat accumulator or thermo chemical accumulator according to any of the preceding claims, **characterised in that** the storage material surrounding the heat transfer pipe is a phase change material, in particular in the form of salts and salt mixtures, in particular alkali metal nitrates, nitrites, sulphates, carbonates, chlorides, hydroxides, bromides, thiocyanates and fluorides or combinations of the latter, in particular anhydrous salts with a melting temperature above 120°C or salt hydrates with a maximum phase transformation temperature of up to 200°C.

## Revendications

1. Accumulateur de chaleur latente ou accumulateur thermochimique comportant au moins un caloduc (10) avec un élément tubulaire (12) et plusieurs ailettes (14, 15) disposés sur le pourtour de l'élément tubulaire (12) et s' étendant vers l' extérieur et un matériau accumulateur entourant le caloduc (10), **caractérisé en ce que** les ailettes (14, 15) sont formée autour de l'élément tubulaire (12) et avec un dispositif de serrage à ressort élastique comme des segments annulaires (16, 18) fixés l' un à l' autre, plus particulièrement deux segments annulaires (16, 18) formant chacun une demi-coque, pour lequel au moins le caloduc (10) est essentiellement formé verticalement dans l'accumulateur de chaleur.

2. Accumulateur de chaleur latente ou accumulateur thermochimique selon la revendication 1, **caractérisé en ce que** le dispositif de serrage comporte au moins un élément de serrage (20) à ressort élastique.

3. Accumulateur de chaleur latente ou accumulateur thermochimique selon l'une des revendications précédentes, **caractérisé en ce que** les éléments de serrage (20) sont fabriqués en acier à ressort.

4. Accumulateur de chaleur latente ou accumulateur thermochimique selon la revendication 2 ou 3, **caractérisé en ce que** chaque élément de serrage (20) est une pièce flexible avec une section de base (28) et deux sections de serrage (30, 32) devant s' étendre l' un sur l'autre à partir de côtés opposés de la section de base (28), les sections de serrage (30, 32) joignant préférablement des sections terminales (34, 36) s' écartant l'une de l'autre et servant d' aide de montage.

5. Accumulateur de chaleur latente ou accumulateur thermochimique selon l'une des revendications précédentes, **caractérisé en ce que** les segments annulaires (16, 18) sont formés comme des profilés extrudés, les ailettes (14, 15) s' étendant dans la direction longitudinale par rapport à l' élément tubulaire (12).

6. Accumulateur de chaleur latente ou accumulateur thermochimique selon l'une des revendications précédentes, **caractérisé en ce que** la géométrie de l' élément tubulaire (12) et les segments annulaires (16, 18) sont ajustés l' un par rapport à l'autre de façon à ce que les segments annulaires (16, 18) recouvrent essentiellement l'élément tubulaire (12).

7. Accumulateur de chaleur latente ou accumulateur thermochimique selon l'une des revendications précédentes, **caractérisé en ce que** les ailettes (14, 15) comportent des ramifications.

8. Accumulateur de chaleur latente ou accumulateur thermochimique selon l'une des revendications 2 à 7, **caractérisé en ce que** les segments annulaires (16, 18) comportent des traverses de fixation (24, 25) entourés par les éléments de serrage (20).

9. Accumulateur de chaleur latente ou accumulateur thermochimique selon l'une des revendications précédentes, **caractérisé en ce que** les segments annulaires (16, 18) sont composés d' un alliage d' aluminium ou d' aluminium non allié, plus particulièrement d' alliages des groupes d' aluminium 1xxx, 3xxx et 6xxx.

10. Accumulateur de chaleur latente ou accumulateur **caractérisé en ce que** thermochimique selon l'une des revendications précédentes, l'élément tubulaire (12) est un élément tubulaire soudé ou embouti.

11. Accumulateur de chaleur latente ou accumulateur thermochimique selon l'une des revendications précédentes, **caractérisé en ce que** l'élément tubulaire (12) est en acier ou en acier inoxydable.

12. Accumulateur de chaleur latente ou accumulateur thermochimique selon l'une des revendications précédentes, **caractérisé en ce que** le matériau accumulateur à changement de phase est prévu sous la forme de sels ou mélanges de sels, plus particulièrement de nitrates de métaux alcalins, de nitrites, de sulfates, de carbonates, de chlorures, d' hydroxydes, de bromures, de thiocyanates, de fluorures ou de combinaisons de ceux-ci, plus particulièrement de sels sans eau avec une température de fusion supérieure à 120 °C ou d' hydrates salins avec une température de changement de phase maximale allant jusqu' à 200 °C.
